# FASCICULE DE BREVET EUROPEEN

(11) **EP 1 328 714 B1**
(45) Date de publication et mention de la délivrance du brevet: **01.03.2006**
(21) Numéro de dépôt: 01988818.9
(22) Date de dépôt: 29.10.2001
(51) Int. Cl.: F02B 31/06

(54) **DISPOSITIF D'OBTURATION DE CONDUITS D'ADMISSION D'AIR D'UN MOTEUR**
VORRICHTUNG ZUM SCHLIESSEN VON MOTORLUFTEINLASSLEITUNGEN
DEVICE FOR CLOSING AN ENGINE AIR INTAKE CONDUITS

(30) Priorité: 27.10.2000 FR 0013964
(43) Date de publication de la demande: 23.07.2003
(73) Titulaire: MANN+HUMMEL GmbH, 71638 Ludwigsburg (DE)
(72) Inventeur: ANGOT, Jean-Philippe, F-53810 Change (FR); MARTEAU, Christophe, F-53000 Laval (FR)
(74) Mandataire: Voth, Gerhard
(86) Numéro de dépôt international: PCT/EP2001/012572
(87) Numéro de publication internationale: WO 2002/035071

(56) Documents cités:
- WO-A-01/36796
- WO-A-96/31692
- DE-A- 3 833 846
- DE-A- 19 504 256
- DE-A- 19 834 836
- DE-A- 19 941 035
- US-A- 4 318 273
- US-A- 5 696 318

## Description

La présente invention concerne un dispositif d'obturation de conduits d'admission d'air d'un moteur thermique à combustion interne. Plus particulièrement, elle concerne un dispositif d'obturation permettant d'agir sur le débit gazeux circulant entre le collecteur d'admission du moteur et ses différents cylindres (voir par exemple US-A-5 696 318).

Dans ce type de moteurs, on cherche à optimiser la combustion du carburant dans les cylindres en améliorant le mélange du combustible et de l'air utilisé comme comburant pendant la phase d'admission. Dans les moteurs à injection de carburant, le problème est crucial aux bas régimes de fonctionnement, étant donné l'absence de système à carburateur qui réalise un aérosol de carburant dans l'air d'admission. Le problème est généralement résolu en provoquant de la turbulence dans les débits gazeux qui sont introduits dans chaque cylindre du moteur. Une technique souvent utilisée est celle de l'effet "swirl" ou encore de la rotation des gaz dès leur entrée dans le cylindre afin de créer un mouvement tourbillonnaire d'axe parallèle à celui du cylindre, propice à l'amélioration du mélange air - carburant. Pour y parvenir, on dispose judicieusement l'arrivée des conduits par rapport à l'axe du cylindre et on règle la vitesse et le débit d'air entrant par chaque conduit de manière indépendante de ceux des autres conduits aboutissant dans le même cylindre. Une autre technique consiste à générer un effet "tumble", c'est-à-dire un mouvement tourbillonnaire dont l'axe est perpendiculaire à celui du cylindre.

Des dispositifs connus capables de générer un effet swirl ou un effet tumble d'intensité variable selon la charge et le régime du moteur se rencontrent couramment dans les véhicules automobiles. Ils sont généralement réalisés en métal, avec un corps en aluminium et des volets orientables en acier permettant le réglage commandé de l'obturation des conduits d'admission. On a également cherché à produire de tels dispositifs avec de la matière plastique, pour en alléger le poids et en réduire les frais d'usinage. La demande de brevet EP-0701057-A1 divulgue un système d'obturation partielle pour moteurs comportant plus d'une soupape d'admission qui est réalisé au moyen d'un corps comprenant les conduits d'admission et des volets obturateurs en matière plastique, les volets étant entraînés par un axe métallique. Le rattrapage du jeu inhérent à la forme imparfaite et aux déformations des pièces en matière plastique est réalisé au moyen d'un système complexe impliquant une section d'arbre de rotation de forme carrée sur lequel peuvent coulisser des tourillons de section intérieure carrée et extérieure circulaire qui portent les volets.

Ces dispositifs connus présentent cependant l'inconvénient d'une réalisation délicate et d'un montage impliquant la mise en place de nombreuses pièces différentes dans un agencement relativement complexe. Par ailleurs, le couple mécanique à fournir à l'axe de rotation pour effectuer le réglage de l'obturation demeure relativement élevé, ce qui occasionne des pertes d'énergie et un système de commande et de régulation plus élaboré et coûteux.

Pour remédier à ces défauts des dispositifs connus, l'invention a pour but de fournir un dispositif d'obturation dont le montage soit facile, notamment en ce qui concerne l'alignement des paliers de l'axe de rotation portant les éléments d'obturation des conduits. Un autre but du dispositif selon l'invention est aussi de permettre le mouvement de l'axe au moyen d'un couple faible. Enfin, le dispositif selon l'invention peut aussi être associé très facilement au répartiteur d'air en matière plastique et constituer ainsi une seule pièce d'équipement complet réalisée indépendamment du processus de fabrication du moteur et qui peut être ensuite montée très aisément en une seule opération par le constructeur du moteur sur la culasse de celui-ci.

A cet effet l'invention concerne un dispositif d'obturation de conduits d'admission d'air d'un moteur thermique à combustion interne, destiné à être inséré entre la culasse (30) du moteur et un répartiteur d'air (20) se terminant à son extrémité dirigée vers le moteur par des conduits d'admission d'air distincts, et comprenant des moyens d'obturation (11) des conduits, mobiles autour d'un axe de rotation (12), qui permettent de fermer simultanément, de manière commandée, au moins temporairement et partiellement et de manière continue et progressive, un ou plusieurs conduits, ledit dispositif comprenant une pièce (1) faisant vis-à-vis au répartiteur d'air (20) et dont au moins une portion des surfaces de contact de la pièce (1) et du répartiteur (20) se rejoint à hauteur de l'axe (12) des moyens d'obturation (11), la pièce (1) étant essentiellement constituée d'une plaque (5) percée d'orifices (8), d'un joint d'étanchéité (6) disposé sur la totalité de son pourtour (7) et de conduits (9) disposés dans l'axe des conduits d'admission et prolongeant ces derniers.

Par dispositif d'obturation, on entend désigner tout dispositif permettant de fermer à volonté, totalement ou partiellement, au moins un des conduits d'admission d'air du moteur.

Ces conduits d'admission sont les conduits présents dans chaque moteur thermique aboutissant à la partie supérieure de chaque cylindre du moteur à l'endroit d'une soupape d'admission et provenant d'un répartiteur chargé de répartir l'air aspiré entre tous les cylindres.

Par moteur thermique, on entend désigner ici un moteur à combustion interne ou à explosion comprenant au moins un cylindre dans lequel coulisse un piston animé d'un mouvement alternatif qui est transformé en mouvement de rotation au moyen d'un système bielle-manivelle et dans lequel l'énergie chimique de combustion d'un carburant est transformée en énergie cinétique de rotation d'un arbre.

Le dispositif selon l'invention est inséré entre le répartiteur d'air et la culasse, c'est-à-dire entre la pièce qui répartit entre les différents cylindres l'air utilisé comme comburant par le moteur et la culasse de celui-ci.

Les moyens d'obturation employés se définissent comme tout moyen capable de rétrécir la section de passage du débit gazeux dans le conduit d'admission. Il importe que ces moyens puissent permettre à volonté d'ajuster sur commande la section de passage, jusqu'à la fermeture complète du conduit. Des exemples de ces moyens sont des volets, diaphragmes et boisseaux. Les volets et les boisseaux sont préférés.

Les conduits sont des canalisations situées dans le corps du dispositif selon l'invention qui prolongent chaque conduit d'admission d'air. Les moyens d'obturation sont situés dans ces conduits.

Selon l'invention, ces moyens d'obturation sont mobiles autour d'un axe de rotation. Cet axe peut traverser ou non le conduit d'admission d'air. De préférence, l'axe de rotation ne traverse pas le conduit d'admission. La commande de rotation de cet axe permet le réglage du taux d'obturation du conduit.

Selon l'invention, lorsque le dispositif permet l'obturation de plusieurs conduits d'admission d'air, la commande de fermeture est simultanée pour tous les conduits. De préférence, le taux d'obturation réalisé est identique pour chaque conduit correspondant pour chaque cylindre.

Conformément à l'invention, le dispositif d'obturation comporte un corps formé du répartiteur d'air et une pièce qui lui fait vis-à-vis dont au moins une portion des surfaces de contact de la pièce et du répartiteur se rejoint à hauteur de l'axe de moyens d'obturation. Selon l'invention, cette pièce est essentiellement constituée d'une plaque (5) percée d'orifices (8), d'un joint d'étanchéité (6) disposé sur la totalité de son pourtour (7) et de conduits (9) disposés dans l'axe des conduits d'admission et prolongeant ces derniers.

Selon un mode de réalisation particulier de l'invention, une deuxième pièce est disposée entre le répartiteur (20) et la pièce (1), la pièce (2) comportant une semelle (2') percée d'orifices (3) qui correspondent exactement aux conduits d'admission d'air traversant la culasse (30) du moteur et étant bordée par des parois (4) qui l'entourent, sont.parallèles à la direction des conduits d'admission d'air, se prolongent en saillie par rapport à la surface de la semelle (2'), du côté de la culasse (30) et délimitent un espace creux en coopération avec cette semelle (2').

Par le vocable "moyens d'étanchéité", on entend des moyens n'autorisant pas le passage de l'air à l'endroit où la plaque vient en contact avec le reste de la pièce. Un exemple de tels moyens est un joint souple inséré dans une rainure qui est creusée sur la circonférence de la plaque. Un autre exemple qui donne de bons résultats est celui d'un joint surmoulé sur la plaque.

Les orifices sont des lumières percées dans la plaque, dans l'axe des conduits. De préférence, ils ont une section qui est exactement pareille à la section intérieure de conduits.

Selon un mode de réalisation particulièrement préféré du dispositif conforme à l'invention, la deuxième pièce est solidaire d'au moins une partie du répartiteur d'air (20). Tout type de solidarisation peut convenir. Des exemples de solidarisation sont la fixation de la deuxième pièce au répartiteur par un moyen mécanique quelconque tel que le boulonnage, l'utilisation de pattes de fixation, de colliers de serrage, la fixation par soudage ou encore par réalisation intégrée du répartiteur avec la première pièce. Un exemple donnant d'excellents résultats de cette dernière variante d'intégration est la fabrication par moulage en une seule et même pièce du répartiteur et de la deuxième pièce.

Un dispositif particulier conforme à l'invention qui peut éventuellement comprendre une ou les deux pièces décrites *supra* implique des moyens d'obturation qui comprennent un axe parallèle à la direction de la culasse et traversant chaque conduit à obturer. Cet axe porte, à l'endroit du passage à l'intérieur des conduits à obturer, un élément d'obturation qui lui est solidaire et dont la rotation permet l'obturation progressive du conduit.

Un autre dispositif particulier conforme à l'invention, mais différent du précédent et qui peut toujours éventuellement comprendre une ou les deux pièces décrites *supra* implique d'autres moyens d'obturation qui comprennent, dans chaque conduit à obturer, un axe perpendiculaire à la direction de la culasse et traversant le conduit, qui porte un élément d'obturation étant solidaire de l'axe et dont la rotation permet l'obturation progressive du conduit. Chaque conduit à obturer dispose de cette façon de son propre axe. L'ensemble de ces axes sont reliés hors du conduit et d'un même côté de celui-ci, par un système d'entraînement à biellettes commandées par une tige unique parallèle à l'axe de la culasse.

Dans chacun de ces divers dispositifs, l'élément d'obturation peut être matérialisé par un volet solidaire de l'axe. Il peut aussi, en variante, être matérialisé par un boisseau, avec l'avantage que dans ce cas, l'axe ne traverse plus le conduit, mais relie en fait les différents boisseaux entre eux, ce qui permet d'éviter les turbulences trop importantes lorsque le taux d'obturation est minimum.

Les éléments d'obturation peuvent être réalisés en différentes matières ou compositions compatibles avec l'environnement du moteur et en particulier, celui des conduits d'admission d'air. On peut, par exemple utiliser des éléments en métal. On peut ainsi utiliser des volets en acier ou en alliage d'aluminium. On peut encore utiliser un élément d'obturation en matière plastique, par exemple un volet ou un boisseau à base de résine thermoplastique ou thermodurcissable. Les éléments d'obturation réalisés en matière plastique sont préférés.

L'axe portant les éléments d'obturation peut lui même, indépendamment de la nature des éléments d'obturation qu'il porte être réalisé en des matières ou compositions de natures diverses. Il peut, par exemple être réalisé en métal, comme par exemple en acier ou en métal léger tel que l'aluminium ou un alliage d'aluminium. Il peut aussi avantageusement être réalisé en matière plastique. Comme matière plastique, on peut par exemple utiliser une résine polyamide.

L'invention concerne également l'utilisation du dispositif décrit plus haut dans un moteur thermique à cylindres comprenant plus d'une soupape d'admission par cylindre.

En particulier, le dispositif décrit plus haut est particulièrement bien adapté à l'utilisation dans un moteur thermique suralimenté, c'est-à-dire un moteur dans lequel l'admission d'air s'effectue à une pression supérieure à la pression atmosphérique.

Les figures qui suivent sont données dans le but d'illustrer l'invention, sans vouloir en restreindre la portée.

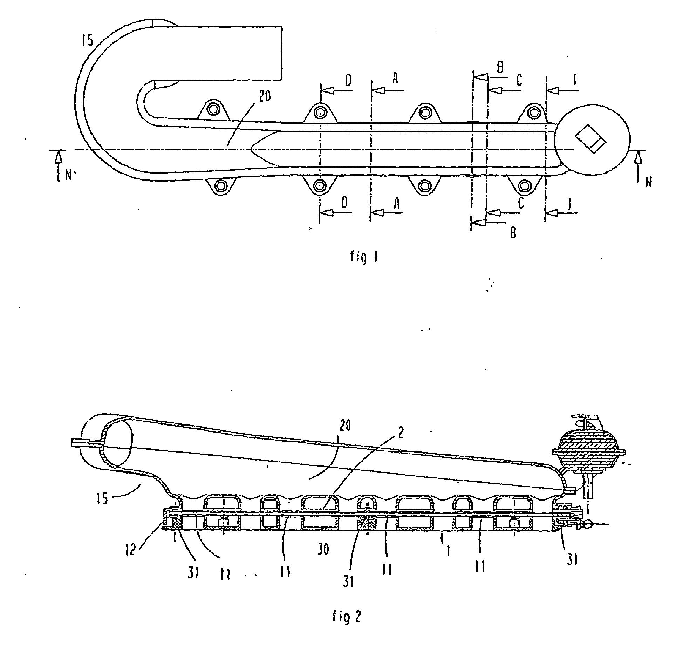

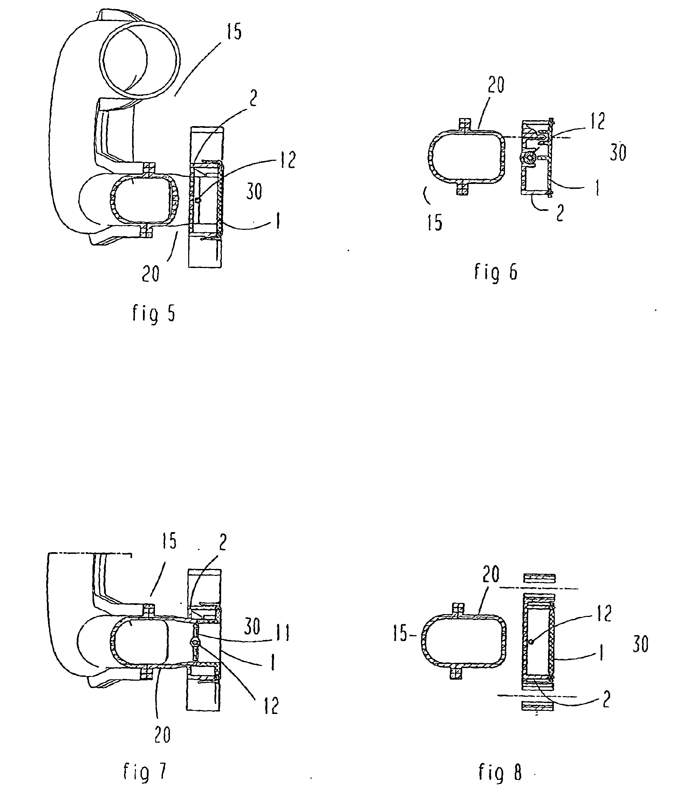

Les figures 1 à 11 illustrent une première forme de réalisation concrète de l'invention comportant des éléments d'obturation matérialisés par des volets en matière plastique tournant autour d'un axe unique.

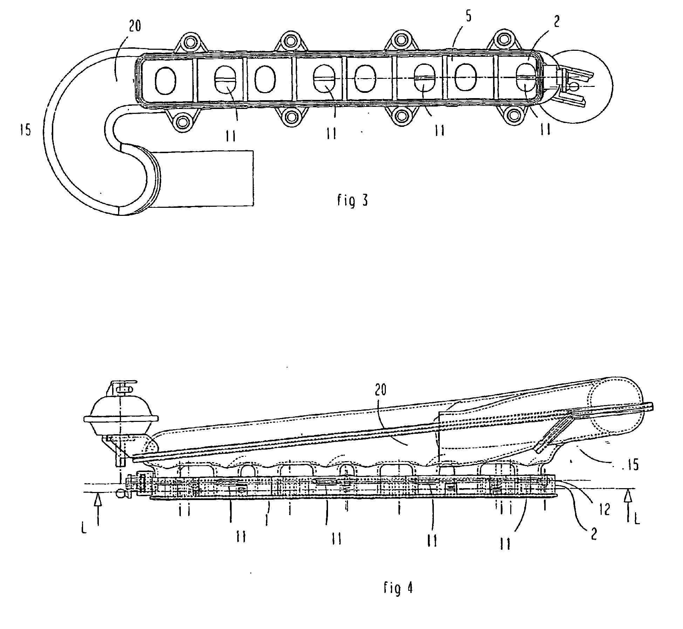

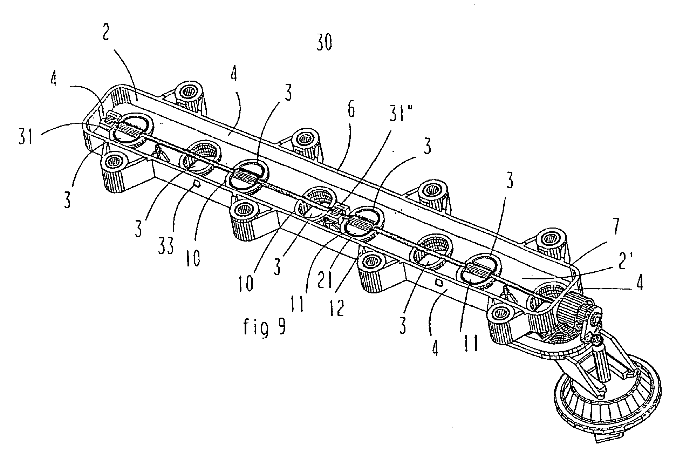

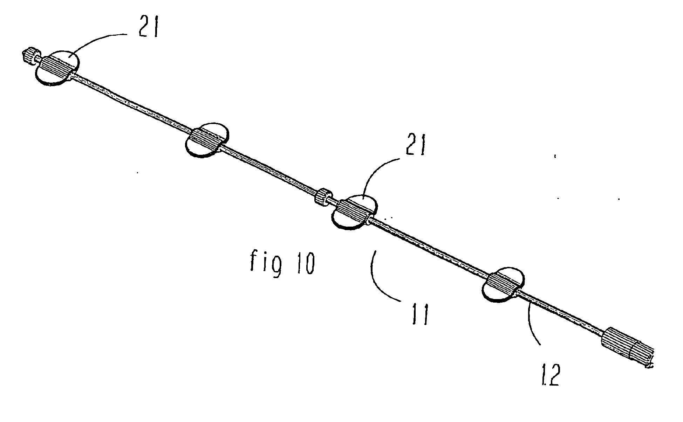

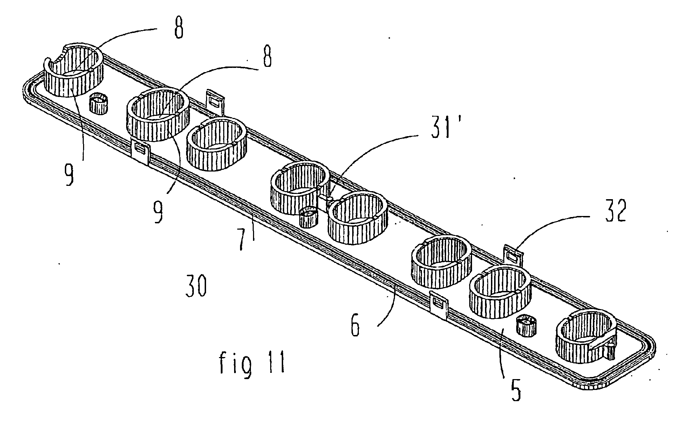

Les figures 1 et 4 représentent, respectivement, une vue en plan et une vue en élévation du dispositif conforme à l'invention. La figure 1 porte les références de 5 plans de coupe notés A-A, B-B, C-C, D-D et N-N et la figure 4, la référence d'un plan noté L-L. Les vues en coupe ou en section correspondant à ces plans de coupe sont illustrées respectivement aux figures 2 (coupe selon N-N), 5 (coupe selon B-B), 7 (coupe selon C-C), 6 (section selon A-A), 8 (section selon D-D) et 3 (coupe selon L-L). La coupe selon le plan I-I apparaissant sur la figure 1 n'est pas illustrée. Par ailleurs, les figures 9 à 11 donnent une représentation éclatée en perspective de la première pièce (1) (fig. 11), de la deuxième pièce (2) (fig. 9) ainsi que des moyens d'obturation (11) formés de l'axe (12) portant les éléments d'obturation (21) (fig. 10). Les figures 1 à 8 quant à elles se rapportent au cas où la deuxième pièce (2) est intégrée au répartiteur (20).

Dans ces figures, un corps (15) en matière plastique se prolonge en direction de la culasse (30) du moteur par un répartiteur d'air (20) ("manifold" pour les anglo-saxons). La figure 11 montre en particulier une vue en perspective, la première pièce (1) en matière plastique et la plaque (5) percée d'orifices (8), un joint d'étanchéité (6) disposé sur la totalité de son pourtour (7) et les conduits (9) disposés dans l'axe des conduits d'admission et prolongeant ces derniers. Cette première pièce comporte également une partie (31') des paliers destinés à supporter l'axe de rotation (12), ainsi que des clips (32) destinés à enserrer des ergots de fixation.

A la figure 9, également en perspective, on voit aussi une deuxième pièce (2) en matière plastique, disposée entre le corps (15) et la pièce (1) comportant une semelle (2') percée d'orifices (3) qui correspondent exactement aux conduits d'admission d'air traversant la culasse (30) du moteur. Cette deuxième pièce (2) est bordée par des parois (4) qui l'entourent et sont parallèles à la direction des conduits d'admission d'air. Ces parois (4) se prolongent en saillie par rapport à la surface de la semelle (2'), du côté de la culasse (30) et délimitent un espace creux en coopération avec cette semelle (2'). Ces parois sont munies d'ergots de fixation (33) destinés à recevoir les clips (32) de la pièce (1).

Les moyens d'obturation (11) sont matérialisés par un axe unique de rotation (12) en matière plastique, parallèle à la direction de la culasse, dans sa plus grande longueur et traversant les conduits d'admission d'air. Au passage de chaque conduit à obturer, l'axe (12) porte des volets (21) en matière plastique solidarisés avec l'axe (12). L'axe (12) repose sur des paliers (31) réalisés eux aussi en matière plastique à faible coefficient de friction et qui font partie de la deuxième pièce (2) (partie 31 ") et de la pièce 1 (partie 31').

Les figures 12 à 24 illustrent une deuxième forme de réalisation concrète de l'invention comportant des éléments d'obturation matérialisés par des volets en matière plastique tournant autour d'axes indépendants actionnés simultanément.

Les figures 15, 17, 30, 12, 16 et 21 représentent, respectivement, trois vues en élévation, deux vues en plan et une vue de profil du dispositif conforme à l'invention.

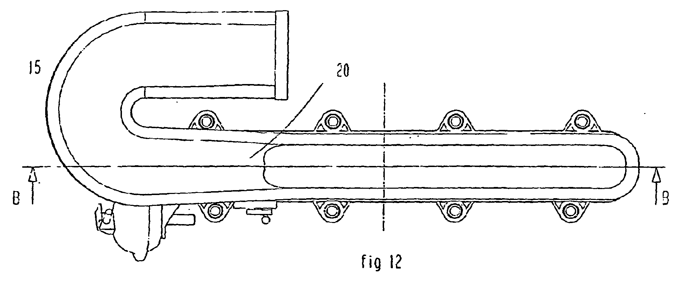

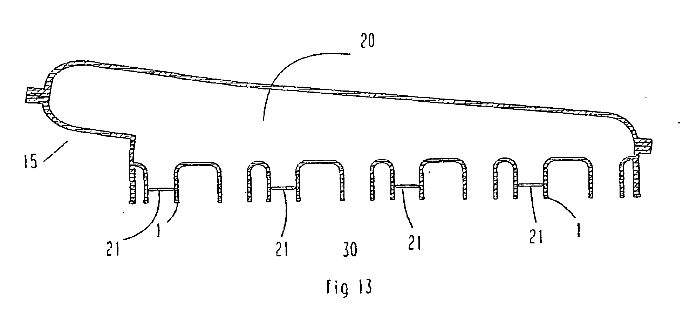

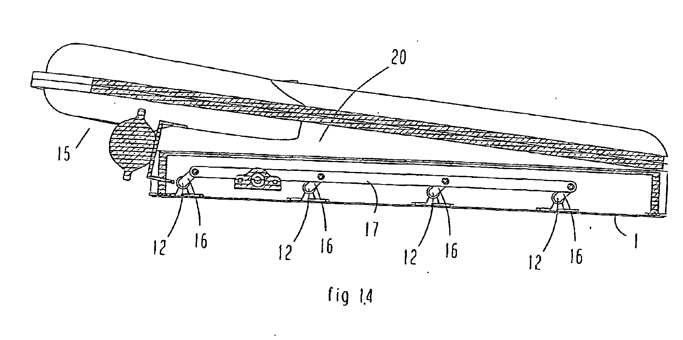

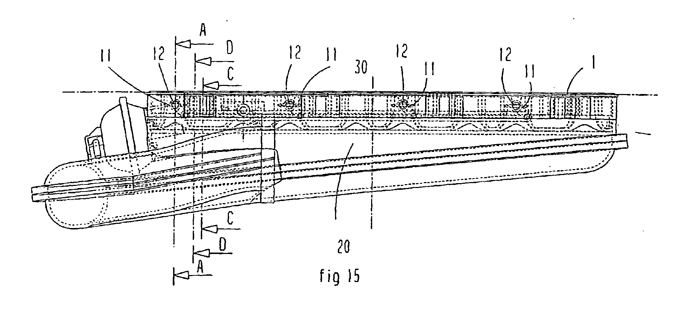

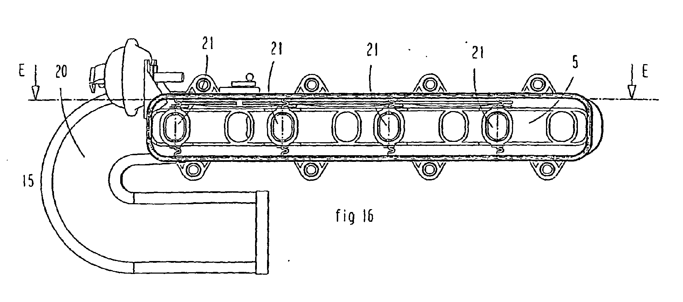

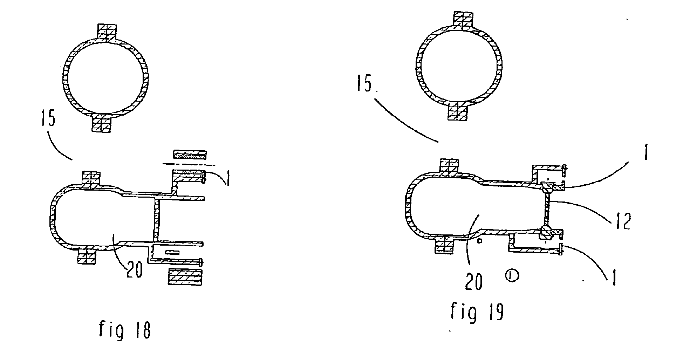

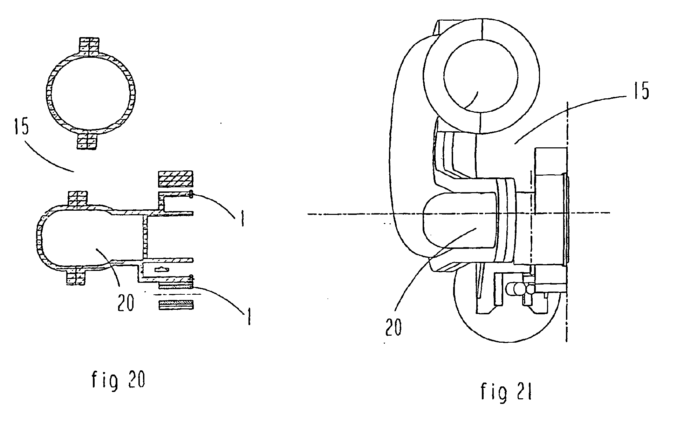

La figure 15 porte les références de 3 plans de coupe notés A-A, C-C et D-D. Les vues en section correspondant à ces plans de coupe sont illustrées respectivement aux figures 19, 20 et 18. La figure 12 porte les références d'un plan de coupe noté B-B et la vue en section correspondante est illustrée à la figure 13. La figure 16 porte les références d'un plan de coupe noté E-E et la vue en coupe qui lui correspond est illustrée à la figure 14.

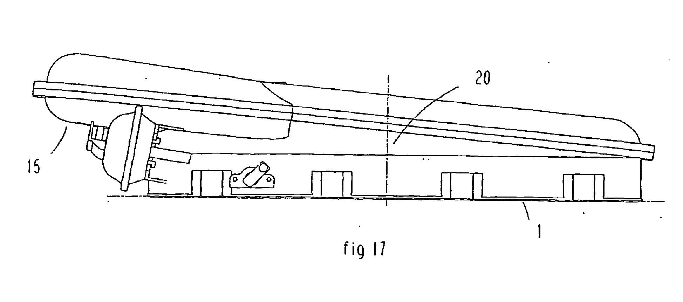

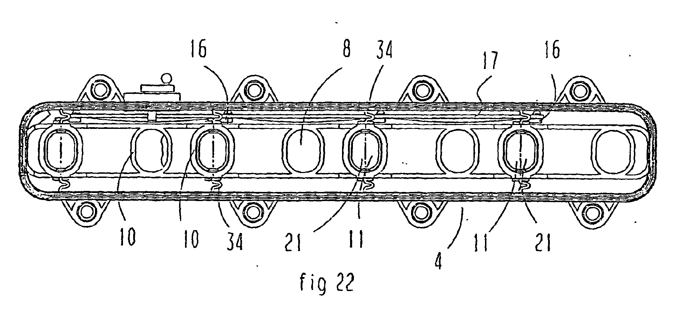

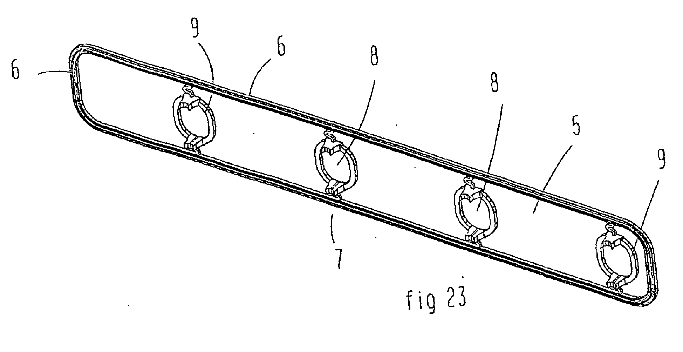

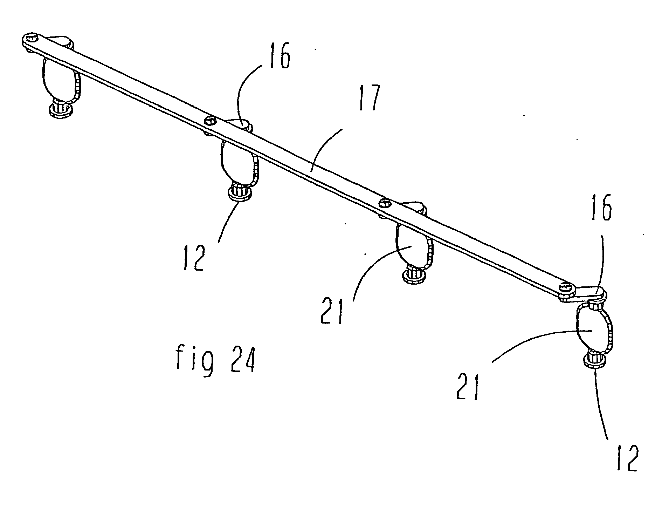

Par ailleurs, les figures 22 à 24 donnent une représentation éclatée en perspective de la première pièce (1) (fig. 23), de la deuxième pièce (2) (fig. 22) ainsi que des moyens d'obturation (11) formés des axes (12) portant les éléments d'obturation (21) commandés ensemble par un système d'entraînement à biellettes (16 et 17) (fig. 24). Les figures 12 à 21 quant à elles se rapportent au cas où la deuxième pièce (2) est intégrée au répartiteur (20).

Les dispositions du corps (15) par rapport à la culasse (30), de même que celle du répartiteur (20) et des pièces (2) et (1) sont semblables à celles décrites ci-dessus dans les figures 1 à 11 se rapportant à la première forme de réalisation. Toutefois, dans le cas présent d'un système à pluralité d'axes (12) de rotation, ces derniers sont disposés perpendiculairement aux parois (4) de la pièce (2). Ils sont également réalisés en matière plastique et portent aussi des volets (21) en matière plastique qui leur sont solidaires et sont destinés à obturer les conduits par rotation autour des axes (12). L'entraînement simultané de l'ensemble des axes (12) et des volets (21) est effectué au moyen de biellettes (16) en matière plastique rigide articulées sur un même tige (17), en matière plastique rigide elle aussi.

La figure 22 montre aussi que les conduits munis d'éléments d'obturation (volets 21) se prolongent dans la plaque par des continuités de conduit (10) reliés à la plaque au moyen de formes en "S" (34) permettant un léger déplacement de rattrapage de l'alignement avec les conduits d'admission d'air.

## Revendications

1. Dispositif d'obturation de conduits d'admission d'air d'un moteur thermique à combustion interne, destiné à être inséré entre la culasse (30) du moteur et un répartiteur d'air (20) se terminant à son extrémité dirigée vers le moteur par des conduits d'admission d'air distincts, et comprenant des moyens d'obturation (11) des conduits, mobiles autour d'un axe de rotation (12), qui permettent de fermer simultanément, de manière commandée, au moins temporairement et partiellement et de manière continue et progressive, un ou plusieurs conduits, **caractérisé en ce que** ledit dispositif comprenant une pièce (1) faisant vis-à-vis au répartiteur d'air (20) et dont au moins une portion des surfaces de contact de la pièce (1) et du répartiteur (20) se rejoint à hauteur de l'axe (12) des moyens d'obturation (11), la pièce (1) étant essentiellement constituée d'une plaque (5) percée d'orifices (8), d'un joint d'étanchéité (6) disposé sur la totalité de son pourtour (7) et de conduits (9) disposés dans l'axe des conduits d'admission et prolongeant ces derniers.

2. Dispositif selon la revendication précédente, **caractérisé en ce qu'**une deuxième pièce (2) est disposée entre le répartiteur (20) et la pièce (1), la pièce (2) comportant une semelle (2') percée d'orifices (3) qui correspondent exactement aux conduits d'admission d'air traversant la culasse (30) du moteur et étant bordée par des parois (4) qui l'entourent, sont parallèles à la direction des conduits d'admission d'air, se prolongent en saillie par rapport à la surface de la semelle (2'), du côté de la culasse (30) et délimitent un espace creux en coopération avec cette semelle (2').

3. Dispositif d'obturation selon la revendication 2, **caractérisé en ce que** la pièce (2) est associée à au moins une partie du répartiteur d'air (20).

4. Dispositif selon une quelconque des revendications précédentes, **caractérisé en ce que** les moyens d'obturation (11) comprennent un axe (12) parallèle à la direction de la culasse et traversant chaque conduit à obturer, l'axe portant, à l'endroit du passage à l'intérieur des conduits à obturer, un élément d'obturation (21) qui lui est solidaire et dont la rotation permet l'obturation progressive du conduit.

5. Dispositif selon une quelconque des revendications 1 à 3, **caractérisé en ce que** les moyens d'obturation (11) comprennent, dans chaque conduit à obturer, un axe (12) perpendiculaire à la direction de la culasse (30) et traversant le conduit qui porte un élément d'obturation (21) lui étant solidaire et dont la rotation permet l'obturation progressive du conduit, ces axes (12) étant reliés hors du conduit, d'un même côté de celui-ci par un système d'entraînement à biellettes (16) commandées par une tige unique (17) parallèle à l'axe de la culasse (30).

6. Dispositif selon une quelconque des revendications précédentes, **caractérisé en ce que** les éléments d'obturation (21) sont choisis parmi des volets montés sur l'axe qui traverse chaque conduit à obturer ou des boisseaux qui remplacent totalement l'axe à l'intérieur de ces conduits.

7. Dispositif selon une quelconque des revendications précédentes, **caractérisé en ce que** les éléments d'obturation (21) sont réalisés en matière plastique.

8. Dispositif selon une quelconque des revendications précédentes, **caractérisé en ce que** l'axe (12) portant les éléments d'obturation (21) est réalisé en matière plastique.

9. Utilisation du dispositif selon une quelconque des revendications précédentes dans un moteur thermique à cylindres comprenant plus d'une soupape d'admission par cylindre.

10. Utilisation du dispositif selon une quelconque des revendications précédentes dans un moteur thermique suralimenté.

## Patentansprüche

1. Verschlussvorrichtung für Luftansaugleitungen eines Verbrennungsmotors, dazu bestimmt, zwischen dem Zylinderkopf (30) des Motors und einem Luftverteiler (20) eingefügt zu werden, der an seinem zum Motor gerichteten Ende durch unterschiedliche Luftansaugleitungen abgeschlossen wird und der um eine Drehachse (12) bewegliche Verschlussmittel (11) für die Leitungen enthält, welche über eine Steuerung zumindest zeitweise und teilweise und kontinuierlich und schrittweise eine oder mehrere Leitungen gleichzeitig schließen können, **dadurch gekennzeichnet, dass** die besagte Vorrichtung ein Teil (1) beinhaltet, welches dem Luftverteiler (20) gegenüberliegt und von der mindestens ein Abschnitt der Kontaktoberflächen des Teils (1) und des Verteilers (20) in Höhe der Achse (12) der Verschlussmittel (11) sich zusammenfügt, wobei das Teil (1) im Wesentlichen aus einer mit Löchern (8) versehenen Platte (5), einer über die Gesamtheit seines äußeren Umfangs (7) verlegten Dichtung (6) und Leitungen (9) besteht, die in der Achse der Luftansaugleitungen verlegt sind und diese verlängern.

2. Vorrichtung gemäß des obigen Anspruchs, **dadurch gekennzeichnet, dass** ein zweites Teil (2) zwischen dem Verteiler (20) und dem Teil (1) angeordnet ist, wobei das Teil (2) eine Grundplatte (2') enthält, welche mit Löchern (3) durchbohrt ist, die genau den Ansaugleitungen zugeordnet sind, welche den Zylinderkopf (30) des Motors durchqueren, und mit Wänden (4) begrenzt ist, die es umgeben, die parallel zur Richtung der Luftansaugleitungen verlaufen, sie auf Seiten des Zylinderkopfes (30) im Verhältnis zur Oberfläche der Grundplatte (2') hervorstehend verlängern, und einen Hohlraum zusammen mit dieser Grundplatte (2') bilden.

3. Verschlussvorrichtung gemäß Anspruch 2, **dadurch gekennzeichnet, dass** das Teil (2) zumindest mit einem Teil des Luftverteilers (20) verbunden ist.

4. Vorrichtung gemäß einer der obigen Ansprüche, **dadurch gekennzeichnet, dass** die Verschlussmittel (11) eine parallel zum Zylinderkopf verlaufende Achse (12) beinhalten, die durch jede zu verschließende Leitung läuft, wobei sich auf der Achse dort, wo sie in das Innere der zu verschließenden Leitungen läuft, ein Verschlusselement (21) befindet, das fest mit ihr verbunden ist und dessen Drehung eine progressive Schließung der Leitung ermöglicht.

5. Vorrichtung gemäß einer der obigen Ansprüche 1 bis 3, **dadurch gekennzeichnet, dass** die Verschlussmittel (11) in jeder zu verschließenden Leitung eine quer zum Zylinderkopf (30) verlaufende Achse (12) beinhalten und durch die Leitung laufen, welche ein mit ihr fest verbundenes Verschlusselement (21) enthält, dessen Drehung eine progressive Schließung der Leitung erlaubt, wobei diese Achsen (12) außerhalb der Leitung verbunden sind, und zwar auf derselben Seite wie diese über ein Schaltgestänge (16), das durch eine einzige, parallel zur Achse des Zylinderkopfes (30) verlaufende Stange (17) angetrieben wird.

6. Vorrichtung gemäß einer der obigen Ansprüche, **dadurch gekennzeichnet, dass** die Verschlusselemente (21) aus den Klappen ausgewählt werden, die auf die Achse montiert sind, welche jede zu verschließende Leitung durchquert, oder aus den Drosselküken, welche die Achse im Inneren der Leitungen vollständig ersetzen.

7. Vorrichtung gemäß einer der obigen Ansprüche, **dadurch gekennzeichnet, dass** die Verschlusselemente (21) aus Kunststoff hergestellt sind.

8. Vorrichtung gemäß einer der obigen Ansprüche, **dadurch gekennzeichnet, dass** die Achse (12), auf der sich die Verschlusselemente (21) befinden, aus Kunststoff hergestellt ist.

9. Verwendung der Vorrichtung gemäß einer der obigen Ansprüche in einem Verbrennungsmotor mit Zylindern, der mehr als ein Ansaugventil pro Zylinder beinhaltet.

10. Verwendung der Vorrichtung gemäß einer der obigen Ansprüche in einem vorverdichteten Verbrennungsmotor.

## Claims

1. Device for closing the air intake ducts of an internal combustion engine, said device to be inserted between the cylinder head (30) of the engine and an air distributor (20) and ending in distinct air intake ducts at its end pointing towards the engine, and including means for closing (11) the ducts, said closing means being displaceable around an axis of rotation (12) and allowing one or several of the ducts to be closed simultaneously, in a controlled manner, at least temporarily and partially and in a continuous and progressive manner, **characterised in that** the said device includes one part (1) which faces the air distributor (20), and of which at least one portion of the contact surfaces of the part (1) and of the distributor (20) are joined together at the level of the axis (12) of the closing means (11), the part (1) comprising substantially a plate (5) penetrated by openings (8), a closing joint (6) extending around the entire circumference (7) and ducts (9) disposed in line with the intake ducts and extending the said ducts.

2. Device according to the preceding claim, **characterised in that** a second part (2) is disposed between the distributor (20) and the part (1), the part (2) including a base penetrated by openings (3), which correspond exactly to the ducts for the intake air traversing the cylinder head (30) of the engine, and being edged by the walls (4) which surround it, are parallel to the direction of the air intake ducts, are extended by protruding up in relation to the surface of the base (2') on the side of the cylinder head (30) and define a hollow space in cooperation with the said base (2').

3. Device for closing according to claim 2, **characterised in that** the part (2) is associated with at least one part of the air distributor (20).

4. Device according to any one of the preceding claims, **characterised in that** the means for closing (11) include an axis (12) parallel to the direction of the cylinder head and traversing each duct to be closed, the axis supporting, with regard to the passage inside the ducts to be closed, a closing member (21) which interacts with said axis and the rotation of which allows the progressive closing of the duct.

5. Device according to any one of claims 1 to 3, **characterised in that** the means for closing (11) include, in each duct to be closed, an axle (12) at right angles to the direction of the cylinder head (30) and traversing the duct which supports a closing member (21) which interacts with said duct and the rotation of which allows the progressive closing of the duct, these axles (12) being joined together outside the duct, on the same side as the said duct by a link drive system (16) controlled by a single rod (17) parallel to the axis of the cylinder head (30).

6. Device according to any one of the preceding claims, **characterised in that** the closing members (21) are selected from amongst the flaps mounted on the axle which traverses each duct to be closed or the sleeves which totally replace the axles inside these ducts.

7. Device according to any one of the preceding claims, **characterised in that** the closing members (21) are produced in plastics material.

8. Device according to any one of the preceding claims, **characterised in that** the axle (12) supporting the closing elements (2) is produced in plastics material.

9. Use of the device according to any one of the preceding claims in a heat cylinder engine including more than one inlet valve per cylinder.

10. Use of the device according to any one of the preceding claims in a supercharged heat engine.
